# EUROPÄISCHE PATENTSCHRIFT

(11) **EP 0 503 235 B1**
(45) Veröffentlichungstag und Bekanntmachung des Hinweises auf die Patenterteilung: **11.09.1996**
(21) Anmeldenummer: 92100728.2
(22) Anmeldetag: 17.01.1992
(51) Int. Cl.: C08G 69/44, C08G 69/34

(54) **Polyamide und Polyesteramide auf Basis von trimerisierten Fettsäuren, Verfahren zu ihrer Herstellung und ihre Verwendung als Schmelzklebstoffe**
Polyamide and polyesteramide based on trimerised fatty acids-process of production and application for glues
Polyamide et polyesteramide à partir d'acides gras trimères, procédé de fabrication et leur application comme colles

(30) Priorität: 08.03.1991 DE 4107381
(43) Veröffentlichungstag der Anmeldung: 16.09.1992
(73) Patentinhaber: Witco GmbH, D-59180 Bergkamen (DE)
(72) Erfinder: Broll, Christa, W-4620 Castrop-Rauxel (DE); Imöhl, Wolfgang, Dr. Diplom-Chemiker, W-4750 Unna (DE); Lheureux, Marc, Dr. Diplom-Chemiker, W-4400 Münster (DE)

(56) Entgegenhaltungen:
- EP-A- 0 204 315
- DE-A- 2 659 463
- US-A- 4 569 985

## Beschreibung

Gegenstand der Erfindung sind neue Polyamide und Polyesteramide auf Basis von trimerisierten Fettsäuren, gegebenenfalls Dicarbonsäuren und Aminen, Alkanolaminen, Diolen, ein Verfahren zu ihrer Herstellung und ihre Verwendung als Schmelzklebstoffe.

Thermoplastische Polyamide und Polyesteramide auf Basis von dimerisierten Fettsäuren sind als wertvolle Schmelzklebstoffe in der Technik weitgehend bekannt. Sie werden verwendet direkt aus der Schmelze oder als durch Lösungsmittel aktivierbare Klebstoffe.

Zur Herstellung dieser bekannten Schmelzklebstoffe werden dimerisierte Fettsäuren verlangt, die hinsichtlich ihrer Zusammensetzung an mono-, di- und tri- bzw. höherfunktionellen Säuren bestimmte Bereiche nicht überschreiten dürfen. Von wesentlicher Bedeutung bei den dimerisierten Fettsäuren sind deren Gehalt an dimerisierten Produkten (DE-A-14 95 925). Unter dimeren Fettsäuren werden im allgemeinen Produkte verstanden, welche als ihre Hauptkomponente das Dimerisationsprodukt enthalten neben geringeren Anteilen an nicht umgesetzten monomeren Fettsäuren sowie Anteilen an tri- und höherkondensierten Säuren.

Es sind handelsübliche Produkte, welche durch Polymerisation von gesättigten oder ungesättigten natürlichen oder synthetischen einbasischen aliphatischen Fettsäuren mit 16 - 22 Kohlenstoffatomen nach bekannten Methoden hergestellt werden (vgl. US-PS 2 482 761, US-PS 3 256 304).

Typische im Handel erhältliche dimere Fettsäuren haben etwa folgende Zusammensetzung:

| | |
|---|---|
| Monomere Säuren | 0 - 15 Gew.-% |
| dimere Säuren | 60 - 95 Gew.-% |
| tri- und höherpolymerisierte Säuren | 1 - 35 Gew.-% |

wobei der Gehalt je nach Herkunft der Monomeren, des Polymerisationsverfahrens sowie des Aufbereitungsprozesses innerhalb dieser Grenzen schwanken kann.

Die eingesetzte dimere Fettsäure kann auch in hydrierter Form vorliegen.

Der Gehalt an dimerer Säure kann durch allgemein bekannte Destillationsverfahren bis zu 100 Gew.-% erhöht werden.

Der hierbei anfallende Destillationsrückstand besteht im wesentlichen aus tri- und höherkondensierten Säuren neben geringeren Mengen an Dimerfettsäuren. Die durchschnittliche Zusammensetzung liegt bei 15 - 25 Gew.-% Dimerfettsäure und 75 - 85 Gew.-% an tri- und höherkondensierten Fettsäuren. Der Anteil an monomeren Fettsäuren liegt in der Regel unter 1 Gew.-%.

Diese Destillationsrückstände waren bisher für die Herstellung von Schmelzklebern ungeeignet, da sie aufgrund ihrer Polyfunktionalität zu Vernetzungsreaktionen führten und damit bereits in der Kondensationsphase gelierten.

In der Praxis war man daher bestrebt, die Anteile an trifunktionellen Fettsäuren üblicherweise geringer als 10 Mol-% und vorzugsweise geringer als 5 Mol-% zu halten (US-PS 4 912 196, Sp. 2, Z. 34 - 37). Bei Verwendung von polymerisierten Fettsäuren mit höheren Anteilen an trifunktionellen Komponenten wurde verschiedentlich versucht, den unerwünschten Gelierungseffekt durch Verwendung von sogenannten Kettenabbrechern, wie beispielsweise monofunktionellen oder monofunktionell wirkenden Aminen oder Alkoholen, zu verhindern. Abgesehen davon, daß das bislang nur bei Säuren mit einem Anteil von < 25 Gew.-% an trimerisierten Anteilen versucht wurde, erfüllten die so hergestellten Produkte nur unzureichend die Anforderungen der Praxis hinsichtlich ihrer Klebeigenschaften.

Eine Aufgabe der vorliegenden Erfindung war es daher, thermoplastische Polyamide und Polyesteramide herzustellen auf Basis der oben angeführten Destillationsrückstände mit Anteilen von mehr als ca. 25 Gew.-% an tri- und höherpolymerisierten Fettsäuren, ein Verfahren zur Herstellung dieser Polyamide und Polyesteramide sowie deren Verwendung als Schmelzklebstoffe oder als durch Lösungsmittel aktivierbare Klebstoffe zum Verkleben von anorganischen und organischen Substraten.

Gegenstand der Erfindung sind Polyamide und Polyesteramide, welche dadurch gekennzeichnet sind, daß sie enthalten
A) 20 - 60 Äquivalent-% Tri- und höherpolymerisierte Fettsäuren und
B) 40 - 80 Äquivalent-% Dicarbonsäuren und
C) 10 - 65 Äquivalent-% aliphatische Diamine und E) 35 - 10 Äquivalent-% Monoamine und gegebenenfalls
D) 55 - 25 Äquivalent-% heterocyclische Diamine und
F) bis zu 33 Äquivalent-% Alkanolaminen und/oder Diolen,
wobei das Verhältnis von Carboxylgruppen zu Amin und gegebenenfalls Hydroxylgruppen 1 : 0,78 bis 1 : 1,19 beträgt.

Ein weiterer Gegenstand der Erfindung ist ein Verfahren zur Herstellung von Polyamiden und Polyesteramiden auf Basis von trimerisierten Fettsäuren, welches dadurch gekennzeichnet ist, daß die Komponenten sowie 0,01 - 3 Gew.-% eines Katalysators, bezogen auf die Reaktionsmischung, in einer Inertatmosphäre innerhalb von 2 bis 4 h auf 240 ± 20 °C aufgeheizt werden, die Kondensation bei dieser Temperatur erst 1 bis 2 h bei Normaldruck und anschließend 2 h bei 10 - 50 mbar durchgeführt wird.

Ein weiterer Gegenstand der Erfindung sind Polyamide und Polyesteramide gemäß Anspruch 1, welche
A) 45 - 55 Äquivalent-% Tri- und höherpolymerisierte Fettsäuren und
B) 55 - 45 Äquivalent-% Dicarbonsäuren und
C) 25 - 35 Äquivalent-% aliphatische Diamine und E) 15 - 35 Äquivalent-% Monoamine und gegebenenfalls
D) 40 - 50 Äquivalent-% heterocyclische Diamine und gegebenenfalls
F) bis zu 33 Äquivalent-% Alkanolaminen und/oder Diolen
enthalten, wobei das Verhältnis von Carboxylgruppen zu Amin und gegebenenfalls Hydroxylgruppen 1 : 0,9 beträgt.

Ein weiterer Gegenstand der Erfindung ist die Verwendung dieser thermoplastischen Polyamide und Polyesteramide zur Verklebung von anorganischen und organischen Substraten oder zur Verwendung als Vergußmassen.

Die weiteren Gegenstände der Erfindung sind gekennzeichnet durch die Ansprüche.

Überraschenderweise wurde nun gefunden, daß die erfindungsgemäßen Polyamide und Polyesteramide in ihrem Eigenschaftsniveau nicht nur mit denen auf Basis dimerisierter Fettsäuren zu vergleichen sind, sondern teilweise vorteilhafte Eigenschaften auch dort aufweisen, wo die Schmelzklebstoffe gemäß Stand der Technik keinen Erfolg haben. Dies gilt insbesondere für die Verklebung von organischen Substraten mit niedriger Oberflächenenergie wie beispielsweise Polystyrol, Polycarbonat oder Acrylnitril-Butadien-Styrolterpolymer-Copolymerisaten oder anderen in der Praxis bislang schwer zu verklebenden hochschmelzenden Thermoplasten wie Polyamiden, Polyterephthalaten bzw. Polyalkylenterephthalate wie Polybutylenterephthalat (PBTP).

Überraschenderweise kleben die erfindungsgemäßen Produkte nicht nur auf einem der genannten Produkte, sondern es sind gute Klebwerte an verschiedenen Substraten mit gleichem Produkt erzielbar.

Zum Verkleben herkömmlicher Oberflächen wie Metalle oder dessen Legierungen, Glas, Keramik, Papier, Kartonagen, Leder, Textilen sind die erfindungsgemäßen Polyamide und Polyesteramide ebenfalls mit Erfolg einsetzbar.

Polyesteramide, welche als Säurekomponenten eine Mischung aus trimerisierter Fettsäure und vorzugsweise Azelain- bzw. Sebazinsäure und neben der Aminmischung aus 1,2-Diaminoethan, heterocyclischen Diaminen, aromatischen Monoaminen eine Polyetherglykolkomponente mitverwenden, können allein oder mit üblichen Verschnittmitteln als Vergußmassen wie beispielsweise für Kabelstecker verwendet werden.

Zur Herstellung der erfindungsgemäßen Polyamide können neben den bereits genannten polymerisierten Fettsäuren übliche Dicarbonsäuren mitverwendet werden, wobei erfindungsgemäß die oben aufgeführten dimerisierten Fettsäuren mit Dimergehalten von vorzugsweise 60 - 95 Gew.-%, aliphatische Dicarbonsäuren wie Adipinsäure, Pimelinsäure, Suberinsäure, insbesondere aber Azelainsäure, Sebazinsäure und Dekandicarbonsäure eingesetzt werden. Daneben können aromatische Dicarbonsäuren wie Isophthalsäure oder Terephthalsäure ebenfalls mitverwendet werden.

Diese Säuren können allein oder in Mischung und auch in Form ihrer korrespondierenden Ester mit kurzkettigen Alkoholen verwendet werden. Das Verhältnis von Äquivalenten an tri- und höherpolymerisierten Fettsäuren zu den Dicarbonsäuren liegt im Bereich von 60 : 40 bis 20 : 80, insbesondere von 55 : 45 bis 45 : 55.

Die erfindungsgemäß mitzuverwendenden Amine sind die auf diesem Gebiet üblichen aliphatischen, cycloaliphatischen, aromatischen, araliphatischen und heterocyclischen Diamine, welche gegebenenfalls weitere Heteroatome, wie insbesondere Sauerstoffatome, enthalten können, welche darüber hinaus mit kurzkettigen Alkylgruppen substituiert sein können.

Als aliphatische Diamine werden erfindungsgemäß bevorzugt Alkylendiamine wie 1,2-Diaminoethan, 1,4-Diaminobutan, 1,6-Diaminohexan oder Etherdiamine wie 1,12-Diamino-4,9-Dioxa-dodecan oder Polypropylenoxiddiamine mit Molgewichten im Bereich von ca. 400 - 2000 wie die bekannten Jeffamine (Handelsprodukt der Fa. TEXACO), cycloaliphatische Diamine wie 1,4-Diaminocyclohexan, 4,4'-Diamino-dicyclohexylmethan, 4,4-Diamino-dicyclohexylpropan,Isophorondiamin, araliphatische Amine wie Xylylendiamin, heterocyclische Amine wie Piperazin, Dipiperidylpropan-1,3, N,N'-Diperazinylpropan, N-(2-Hydroxyethyl)piperazin, N-(2-Aminoethyl)piperazin.

Als langkettiges Diamin wird das sogenannte Dimerylamin, vorzugsweise in Kombination mit kurzkettigen aliphatischen Diaminen, mitverwendet. Unter Diarylaminen werden in der Praxis Diamine auf Basis dimerisierter Fettsäuren verstanden, deren Carboxylgruppen über Nitrilierung und anschließender Hydrierung in Aminogruppen umgewandelt werden. Zur Regulierung des Molekulargewichts werden aliphatische, cycloaliphatische, aromatische, araliphatische, heterocyclische Monoamine oder monofunktionell wirkende Amine mitverwendet. Als aliphatische Monoamine werden erfindungsgemäß bevorzugt die sogenannten Fettamine eingesetzt. Dies sind überwiegend natürlich vorkommende Amine mit einer C-Kette von 8 - 20 C-Atomen, insbesondere 12 - 18 C-Atomen, welche gegebenenfalls substituiert sein oder Doppelbindungen enthalten können. Als cycloaliphatische Monoamine werden Cyclohexylamin, als aromatische Anilin, Hydroxyanilin, als araliphatische Monoamine Benzylamin, als heterocyclische Monoamine Piperidin oder Morpholin, als monofunktionell wirkende Amine N,N-Dimethylaminopropylamin und 1,2-Diaminocyclohexan mitverwendet. Zur Herstellung der Polyesteramide werden neben den genannten Aminverbindungen Alkanolamine wie Ethanolamin, 1-Amino-3-oxa-5-hydroxypentan(Diglycolamin), 1,4-Dimethylolcyclohexan oder Polyetherglykole wie Polyethylenglykol oder Polypropylenglykol mit Molgewichten im Bereich von ca. 200 - 2000, vorzugsweise 400 - 1000, insbesondere im Bereich um 600 - 800, mitverwendet. Falls gewünscht, können auch kurzkettige Diole, wie Ethylenglykol, Diethylenglykol oder Triethylenglykol sowie Butandiol mitverwendet werden. Bei Mitverwendung von hydroxylgruppenhaltigen Komponenten wird erfindungsgemäß der Schmelzpunkt erniedrigt, so daß bei größeren Anteilen unter Umständen klebrige Produkte erhalten werden können. Diese Zusammenhänge sind dem Fachmann im Prinzip bekannt.

Zur Herstellung der erfindungsgemäßen Polyamide bzw. Polyesteramide werden die reaktiven Komponenten im Verhältnis von Gesamt-Carboxylgruppen zu Gesamt-Amingruppen und gegebenenfalls Hydroxylgruppen von 1 : 0,8 bis 1,1, vorzugsweise 1 : 0,9, eingesetzt. Die nach dem beschriebenen Verfahren hergestellten thermoplastischen Polyamide und Polyesteramide haben im allgemeinen Erweichungspunkte zwischen 70 und 200 °C, vorzugsweise zwischen 90 und 150 °C. Die Schmelzviskosität bei 180 °C liegt im Bereich von 200 bis 13000 mPa.s, vorzugsweise 400 bis 9000 mPa.s.

Die erfindungsgemäßen Polyamide und Polyesteramide können gegebenenfalls in Abmischungen mit den auf diesem Gebiet üblichen Zusatz- und Hilfsstoffen wie Streck- und Verlaufsmittel, Farbstoffe, Pigmente und Stabilisatoren, verwendet werden.

Die Kondensation kann nach den allgemein bekannten Verfahren durchgeführt werden. Erfindungsgemäß wird aber vorzugsweise so verfahren, daß entweder alle Komponenten bei Raumtemperatur zusammengegeben und die Polykondensation wie unter A) beschrieben durchgeführt wird, oder es wird verfahren wie unter B) ausgeführt, das heißt, es wird mit einem Teil der Komponenten ein Prekondensat hergestellt, welches dann mit der oder den Restkomponenten zum Endprodukt kondensiert wird:

### Verfahren A:

In einem Dreihalskolben, ausgerüstet mit Rührer, Thermometer und Destillationsaufsatz, werden die Komponenten sowie 0,01 - 3 Gew.-% eines Katalysators wie Phosphorsäure in einer Inertgasatmosphäre innerhalb von 2 bis 4 h auf 240 °C ± 20 aufgeheizt. Daran schließt sich die Kondensationsphase an, das heißt, die Reaktion wird bei 240 ± 20 °C 1 - 2 h lang bei Normaldruck fortgeführt und anschließend die Kondensation bei 10 - 50, vorzugsweise bei 20 mbar 2 h lang vervollständigt, wobei das entstandene Kondensat kontinuierlich abdestilliert wird.

Sowohl die einzelnen Zeitspannen als auch die Reaktionstemperaturen können je nach eingesetzten Komponenten und gewünschtem Kondensationsgrad unabhängig von den oben angeführten Richtwerten nach oben oder unten angepaßt werden.

### Verfahren B

Es wird verfahren wie unter A) angegeben mit der Abänderung, daß zu der Gesamtmenge der Säurekomponenten(n) die difunktionelle Amin- bzw. Hydroxylgruppen enthaltende Komponente kondensiert wird. Danach wird auf ca. 200 °C abgekühlt, die restlichen Komponenten zudosiert und auf 250 ± 20 °C aufgeheizt und die Kondensation 30 - 60 min bei dieser Temperatur fortgeführt. Die Kondensation des Polyalkylenoxidiols erfolgt zweckmäßigdurch Zugabe von üblichen Katalysatoren bzw. Tetraalkyltitanaten. Analog Verfahren A) schließt sich daran die Kondensationsphase bei 20 mbar an.

Die eingesetzten Destillationsrückstände hatten die folgenden mittels GLC bestimmten Zusammensetzungen:

| | I | II |
|---|---|---|
| monomere Fettsäure: | - | - |
| dimere Fettsäure: | 15,5 Gew.-% | 26 Gew.-% |
| tri- und höherpolymerisierte Fettsäure: | 84,5 Gew.-% | 74 Gew.-% |

Die als Dicarbonsäure mitverwendete dimerisierte Fettsäure hat die Zusammensetzung (GLC):

| | |
|---|---|
| monomere Fettsäure: | 0,5 Gew.-% |
| dimere Fettsäure: | 97,3 Gew.-% |
| tri- und höherpolymerisierte Fettsäure: | 2,2 Gew.-% |

Die Prüfungen wurden nach den jeweiligen DIN-Methoden durchgeführt. Ring- und Kugel Erweichungspunkt: DIN 1995 Zugscherfestigkeit: DIN 53283 bei 20 °C Viskosität: Gemessen mit einem Platte/Kegel-viskosimeter der Fa. Haake nach Angaben des Herstellers.

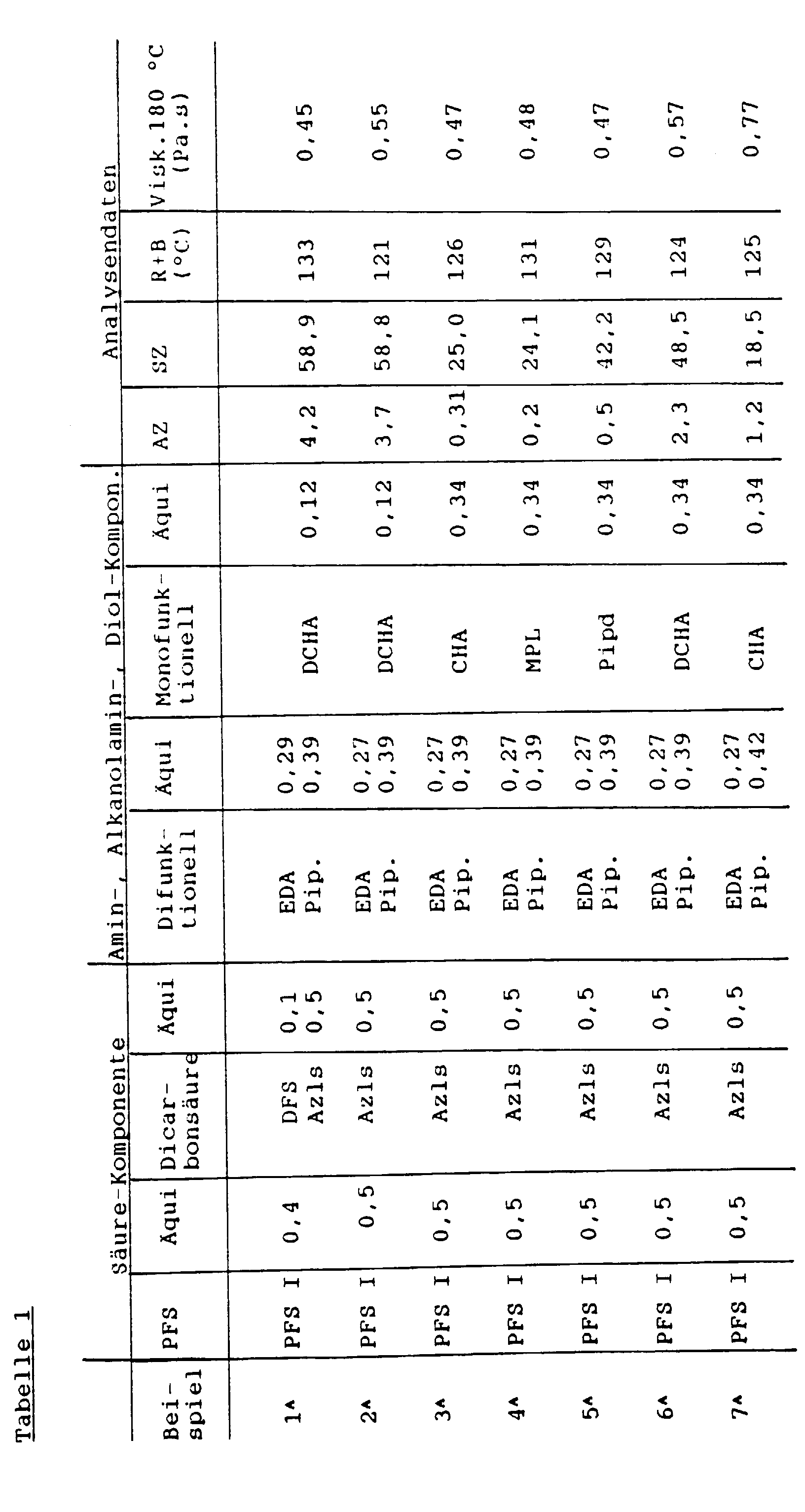

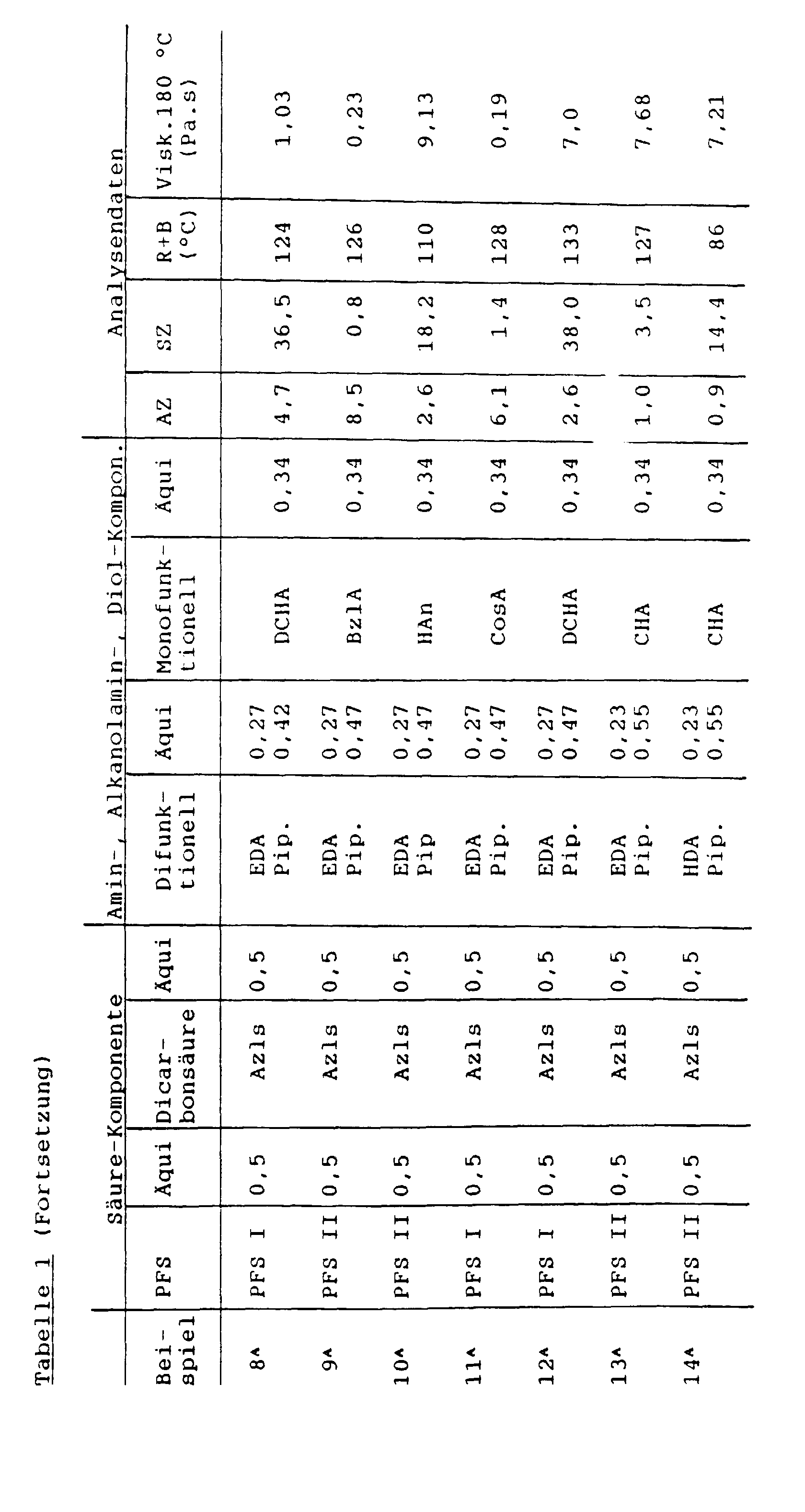

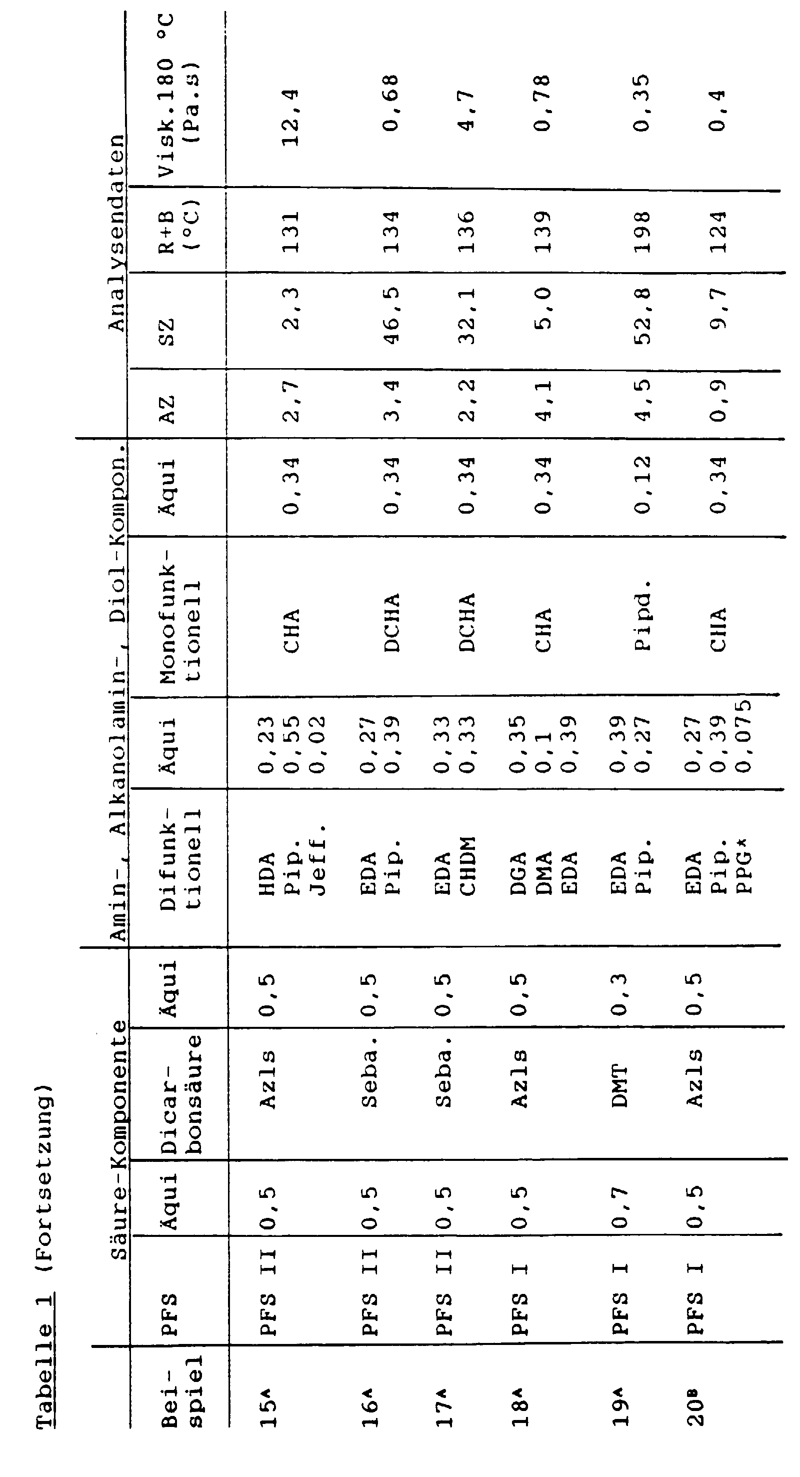

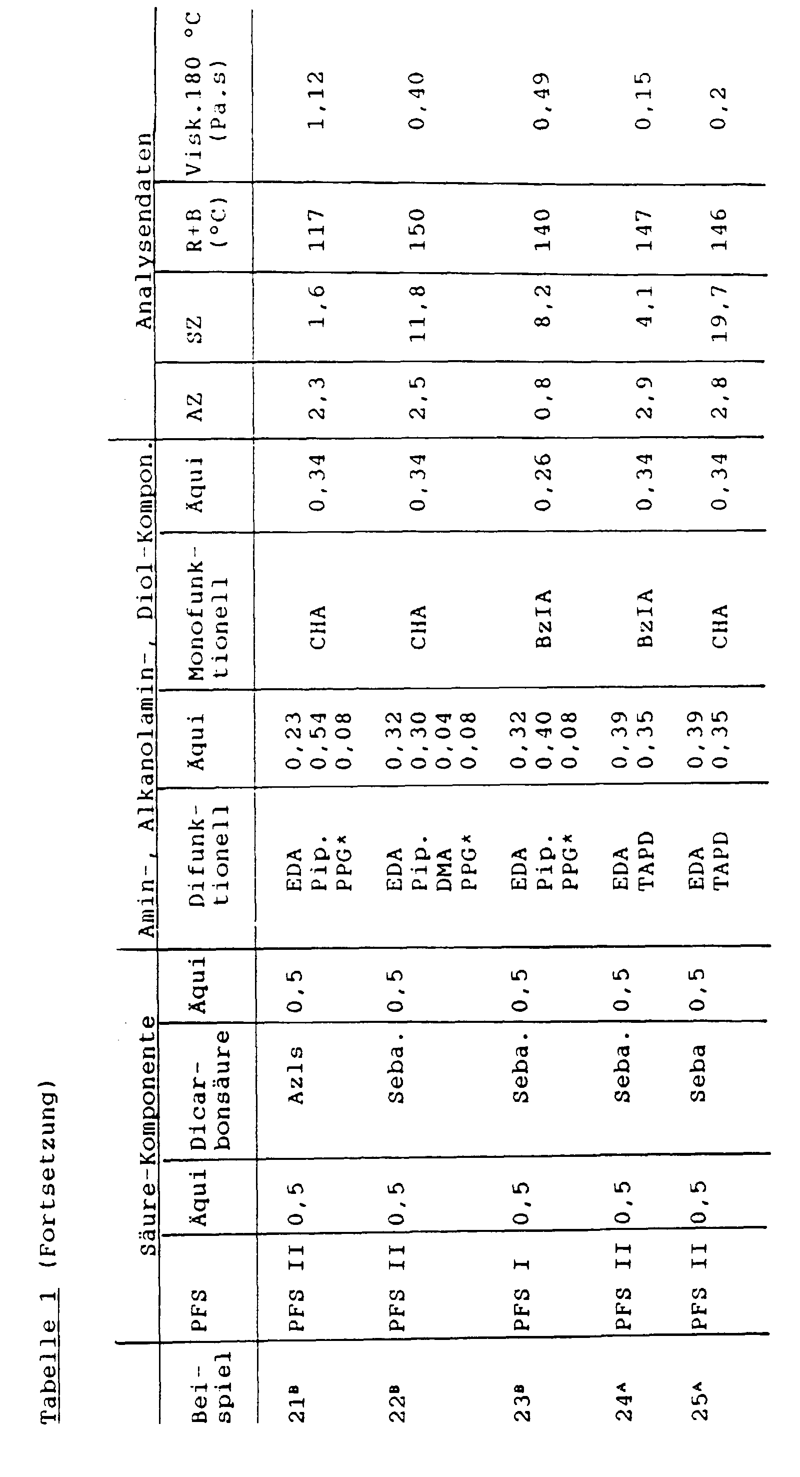

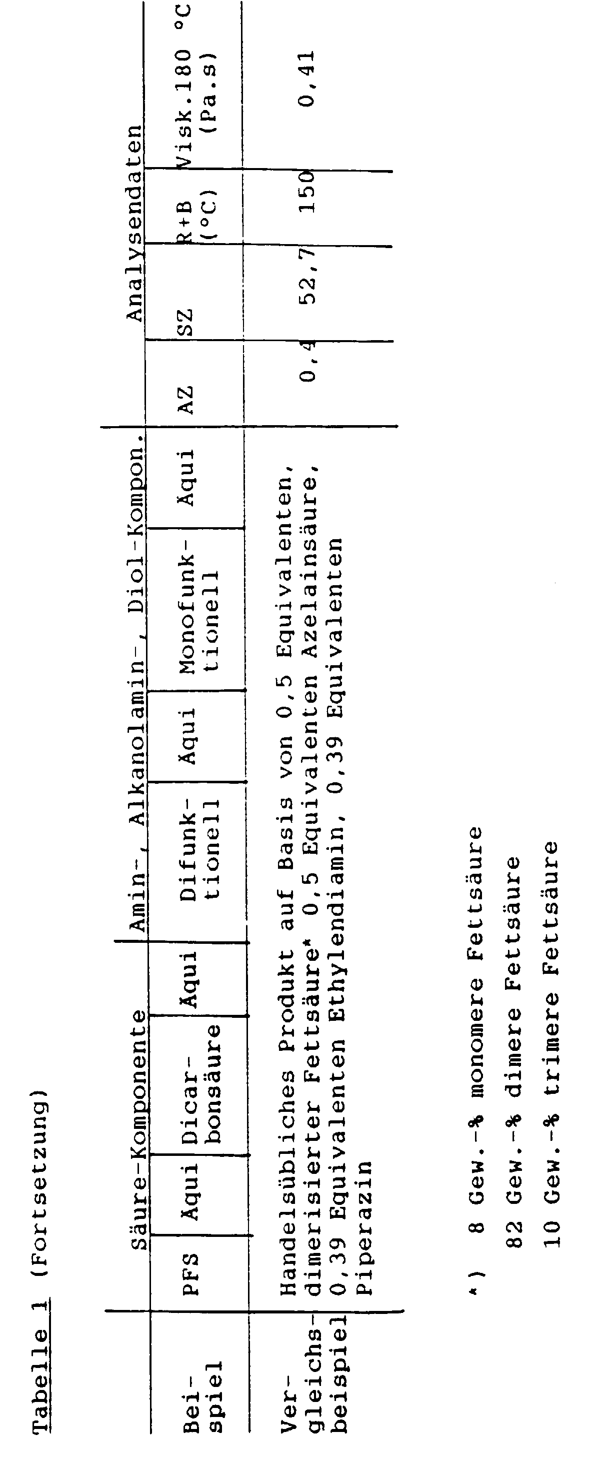

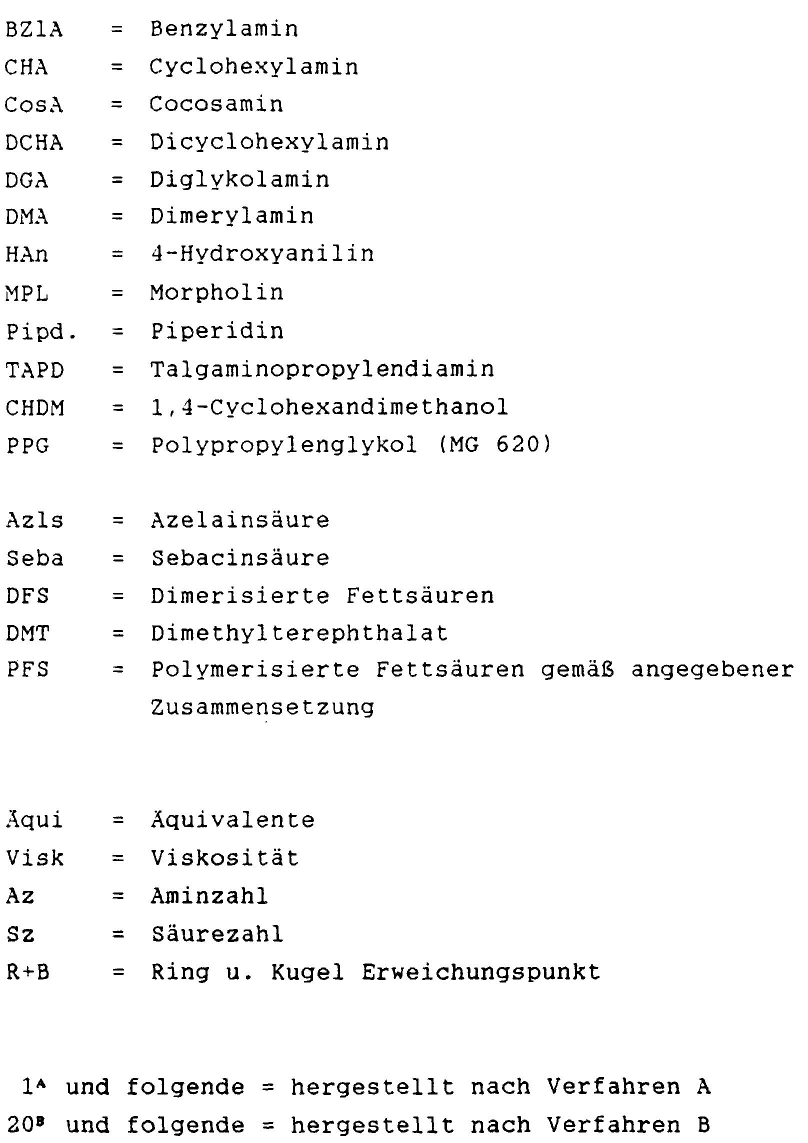

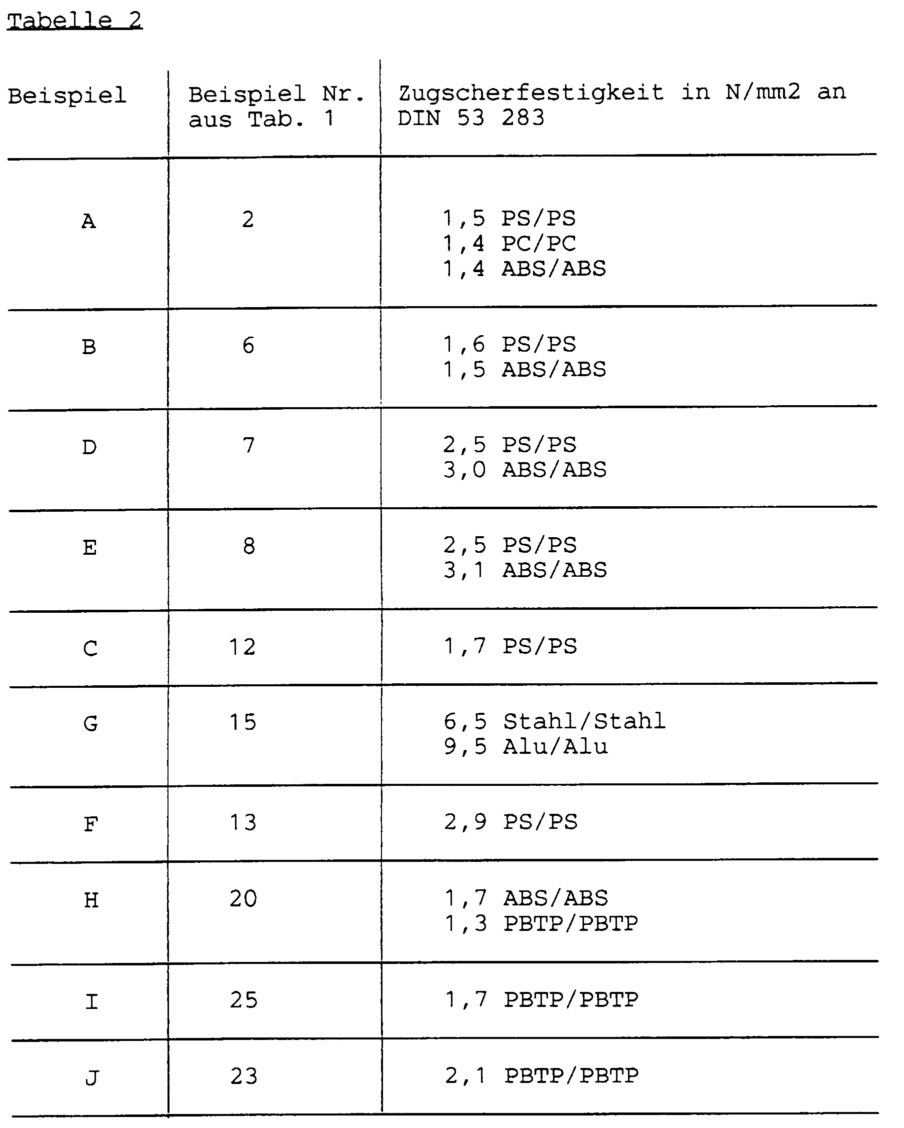

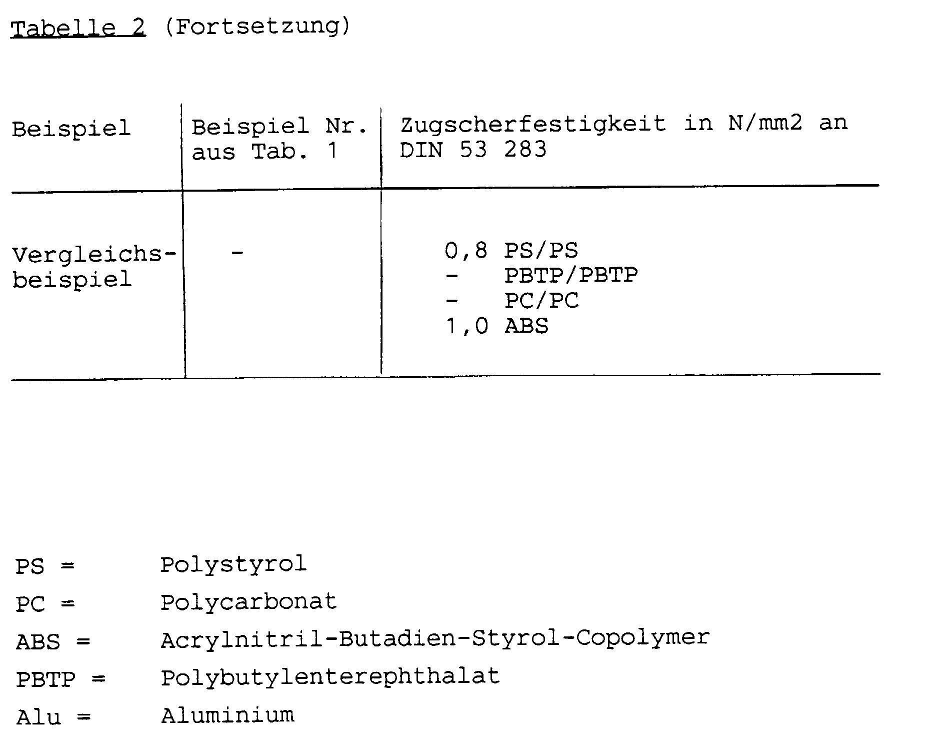

## Patentansprüche

1. Polyamide und Polyesteramide, dadurch gekennzeichnet, daß sie hergestellt werden durch Kondensation von
A) 20 - 60 Äquivalent-% polymerisierter Fettsäure mit einem Gehalt an tri- und höherpolymerisierten Säuren von 74 - 85 Gew.-% und
B) 40 - 80 Äquivalent-% Dicarbonsäuren und ( >
C) 10 - 65 Äquivalent-% aliphatischer Diamine und E) 35 - 10 Äquivalent-% Monoaminen und gegebenenfalls
D) 55 - 25 Äquivalent-% heterocyclischer Diamine und gegebenenfalls
F) bis zu 33 Äquivalent-% Alkanolaminen und/oder Diolen,
wobei das Verhältnis von Carboxylgruppen zu Amin und gegebenenfalls Hydroxylgruppen 1 : 0,78 bis 1 : 1,19 beträgt.

2. Polyamide und Polyesteramide gemäß Anspruch 1, dadurch gekennzeichnet, daß sie enthalten
A) 45 - 55 Äquivalent-% polymerisierter Fettsäure mit einem Gehalt an tri- und höherpolymerisierten Säuren von 74 - 85 Gew.-% und
B) 55 - 45 Äquivalent-% Dicarbonsäuren und
C) 25 - 35 Äquivalent-% aliphatische Diamine und E) 15 - 35 Äquivalent-% Monoamine und gegebenenfalls
D) 40 - 50 Äquivalent-% heterocyclische Diamine und gegebenenfalls
F) bis zu 33 Äquivalent-% Alkanolaminen und/oder Diolen,
wobei das Verhältnis von Carboxylgruppen zu Amin und gegebenenfalls Hydroxylgruppen 1 : 0,9 beträgt.

3. Polyamide und Polyesteramide gemäß Anspruch 1, dadurch gekennzeichnet, daß sie als Codicarbonsäuren Azelainsäure und/oder Sebazinsäure enthalten.

4. Polyamide und Polyesteramide gemäß Anspruch 1, dadurch gekennzeichnet, daß sie als Diamin Ethylendiamin und/oder Isophorondiamin enthalten.

5. Polyamide und Polyesteramide gemäß Anspruch 1, dadurch gekennzeichnet, daß sie als heterocyclisches Diamin Piperazin enthalten.

6. Polyamide und Polyesteramide gemäß Anspruch 1, dadurch gekennzeichnet, daß sie als Monoamine Cyclohexylamin, Dicyclohexylamin, Benzylamin enthalten.

7. Verfahren zur Herstellung von Polyamiden und Polyesteramiden gemäß Anspruch 1, dadurch gekennzeichnet, daß die Komponenten A) - F) sowie 0,01 - 3 Gew.-% eines Katalysators in einer Inertgasatmosphäre innerhalb von 2 - 4 Stunden auf 240 °C aufgeheizt und 1 - 2 Stunden bei 240 ± 20 °C bei Normaldruck und 2 Stunden bei 10 - 50 mbar kondensiert werden, wobei das entstehende Kondensat kontinuierlich abdestilliert wird.

8. Verwendung der Polyamide und Polyesteramide gemäß den Ansprüchen 1 - 6 zur Verklebung von organischen und/oder anorganischen Substraten.

9. Verwendung der Polyesteramide gemäß den Ansprüchen 1 - 6 als Vergußmassen.

## Claims

1. Polyamides and polyester amides, characterised in that they are prepared by the condensation of
A) 20-60 % equivalent of polymerised fatty acid having a content of tri and higher-polymerised acids of from 74 to 85 % by weight and
B) 40-80 % equivalent of dicarboxylic acids and
C) 10-65 % equivalent of aliphatic diamines and
E) 35-10 % equivalent of monoamines and optionally
D) 55-25 % equivalent of heterocyclic diamines and optionally
F) up to 33 % equivalent of alkanolamines and/or diols,
wherein the ratio of carboxy groups to amine and, if appropriate, hydroxy groups is from 1:0.78 to 1:1.19.

2. Polyamides and polyester amides according to claim 1, characterised in that they contain
A) 45-55 % equivalent of polymerised fatty acid having a content of tri- and higher-polymerised acids of from 74 to 85 % by weight and
B) 55-45 % equivalent of dicarboxylic acids and
C) 25-35 % equivalent of aliphatic diamines and
E) 15-35 % equivalent of monoamines and optionally
D) 40-50 % equivalent of heterocyclic diamines and optionally
F) up to 33 % equivalent of alkanolamines and/or diols,
wherein the ratio of carboxy groups to amine and, if appropriate, hydroxy groups is 1:0.9.

3. Polyamides and polyester amides according to claim 1, characterised in that they contain as co-dicarboxylic acids azelaic acid and/or sebacic acid.

4. Polyamides and polyester amides according to claim 1, characterised in that they contain as diamine ethylenediamine and/or isophoronediamine.

5. Polyamides and polyester amides according to claim 1, characterised in that they contain as heterocyclic diamine piperazine.

6. Polyamides and polyester amides according to claim 1, characterised in that they contain as monoamines cyclohexylamine, dicyclohexylamine, benzylamine.

7. Process for the preparation of polyamides and polyester amides according to claim 1, characterised in that components A)-F) and from 0.01 to 3 % by weight of a catalyst are heated to 240°C under an inert gas atmosphere in the course of from 2 to 4 hours, and condensed for from 1 to 2 hours at 240±20°C at normal pressure and for 2 hours at 10-50 mbar, the resulting condensate being distilled off continuously.

8. Use of the polyamides and polyester amides according to any one of claims 1 to 6 for bonding organic and/or inorganic substrates.

9. Use of the polyester amides according to any one of claims 1 to 6 as sealing materials.

## Revendications

1. Polyamides et polyesteramides, caractérisés en ce qu'ils sont préparés par condensation de
A) 20 à 60 % en équivalents d'un acide gras polymérisé ayant une teneur en acides trimérisés et polymérisés à un degré supérieur de 74 à 85 % en masse et
B) 40 à 80 % en équivalents d'acides dicarboxyliques, et
C) 10 à 65 % en équivalents de diamines aliphatiques et
E) 35 à 10 % en équivalents de monoamines et éventuellement
D) 55 à 25 % en équivalents de diamines hétérocycliques et éventuellement
F) jusqu'à 33 % en équivalents d'alcanolamines et/ou de diols,
le rapport des groupes carboxyle aux groupes amine et éventuellement aux groupes hydroxyle étant compris entre 1 : 0,78 et 1 : 1,19.

2. Polyamides et polyesteramides selon la revendication 1, caractérisés en ce qu'ils contiennent
A) 45 à 55 % en équivalents d'un acide gras polymérisé ayant une teneur en acides trimérisés et polymérisés à un degré supérieur de 74 à 85 % en masse et
B) 55 à 45 % en équivalents d'acides dicarboxyliques, et
C) 25 à 35 % en équivalents de diamines aliphatiques et
E) 15 à 35 % en équivalents de monoamines et éventuellement
D) 40 à 50 % en équivalents de diamines hétérocycliques et éventuellement
F) jusqu'à 33 % en équivalents d'alcanolamines et/ou de diols,
le rapport des groupes carboxyle aux groupes amine et éventuellement aux groupes hydroxyle étant de 1 : 0,9.

3. Polyamides et polyesteramides selon la revendication 1, caractérisés en ce qu'ils contiennent de l'acide azélaïque et/ou de l'acide sébacique comme constituants acides dicarboxyliques.

4. Polyamides et polyesteramides selon la revendication 1 caractérisés en ce qu'ils contiennent comme diamine de l'éthyiènediamine et/ou de l'isophoronediamine.

5. Polyamides et polyesteramides selon la revendication 1 caractérisés en ce qu'ils contiennent de la pipérazine comme diamine hétérocyclique.

6. Polyamides et polyesteramides selon la revendication 1 caractérisés en ce qu'ils contiennent comme monoamines de la cyclohexylamine, de la dicyclohexylamine, de la benzylamine.

7. Procédé de préparation de polyamides et de polyesteramides selon la revendication 1, caractérisé en ce que l'on chauffe à 240°C, en l'espace de 2 à 4 heures, les constituants A) à F) et 0,01 à 3 % en masse d'un catalyseur dans une atmosphère inerte, et on les condense pendant 1 à 2 heures à 240 ± 20°C sous la pression normale, et pendant 2 heures sous une pression de 10 à 50 mbars, en distillant de façon continue le produit de condensation formé.

8. Utilisation des polyamides et polyesteramides selon les revendications 1 à 6 pour le collage de substrats organiques et/ou inorganiques.

9. Utilisation des polyesteramides selon les revendications 1 à 6 comme masses de scellement.
